# EUROPÄISCHE PATENTSCHRIFT

(11) **EP 1 790 890 B1**
(45) Veröffentlichungstag und Bekanntmachung des Hinweises auf die Patenterteilung: **25.02.2009**
(21) Anmeldenummer: 06022670.1
(22) Anmeldetag: 31.10.2006
(51) Int. Cl.: F16K 7/10

(54) **Einrichtung zum Öffnen und Schliessen des Querschnittes einer Rohrleitung und Verwendung einer solchen**
Device for opening and closing a pipe and its use
Dispositif d'ouverture et de fermeture d'un tuyau et son utilisation

(30) Priorität: 25.11.2005 AT 19122005
(43) Veröffentlichungstag der Anmeldung: 30.05.2007
(73) Patentinhaber: Ranner, Dietrich, 5301 Eugendorf (AT)
(72) Erfinder: Ranner, Dietrich, 5301 Eugendorf (AT)
(74) Vertreter: Casati, Wilhelm

(56) Entgegenhaltungen:
- WO-A-96/04079
- DE-B- 1 086 500
- DE-U1- 20 020 636
- FR-A1- 2 856 456
- US-A1- 4 614 206
- US-A1- 5 771 937

## Beschreibung

Kontaminierte Böden, Altlasten an Industriestandorten und aufgelassene Hausmülldeponien stellen Gefahren für Mensch, Tier und Umwelt dar. Die Sanierung dieser Standorte erfolgte bis nun überwiegend durch Ausräumen, Reinigen oder neuerliches Deponieren an gesicherten Standorten. Diese "off situ"-Verfahren sind sehr aufwendig und entsprechend teuer.

Wesentlich günstiger würden sich biologische "in situ" Sanierungsverfahren stellen, bei denen der kontaminierte Bereich selbst als Bioreaktor arbeitet und Schadstoffe bakteriell abgebaut werden. Durch die WO 90/07992 wurde ein Verfahren zur biologischen Reinigung von Böden bekannt, die z.B. als langjähriger Standort einer Industrieanlage mit biologisch abbaubaren Schadstoffen verseucht wurden. Dabei wird der kontaminierte Boden ausgekoffert und bevorzugt durch Zumischen von gebrochenem Beton (Bauschutt) zu einem gut durchlüftbaren Körper aufbereitet. Das aufbereitete Material wird auf präpariertem Untergrund zu Regenerationsmieten zwischen 2 und 3 m Höhe aufgeschichtet. Die Mieten werden während des mikrobiologischen Schadstoffabbaus entweder durch Einblasen von Luft oder durch Absaugen der Deponiegase mit Sauerstoff versorgt, wobei die gleichmäßige Durchlüftung durch ein Netz von Rohren im Deponiekörper sichergestellt werden soll. Nach dem bekannten Verfahren werden unter großem Aufwand Schadstoffe aerob abgebaut. Das Erdreich muss dabei jedoch ausgekoffert und so aufbereitet werden, dass auch bei druckloser Sauerstoffzufuhr ausreichend Sauerstoff zu den Schadstoffen gelangt. Es ist hiebei eine gesicherte Deponiefläche zu errichten, so dass die Aufbereitung von Altdeponien praktisch nicht möglich ist, weil solche Deponien nicht geöffnet werden dürfen, da sonst übelriechende Stoffe und giftige Gase in die Umwelt gelangen könnten.

Durch die EP-A1 0 413 947 wurde ein Verfahren zur Reinigung von schadstoffhaltigen Böden bekannt, bei dem ohne Transport des Bodens an die Bodenoberfläche, eine Auflockerung des Bodengefüges mittels einer unter hohem Druck eingebrachten Flüssigkeit, fortschreitend jeweils innerhalb mindestens eines weitgehend zylindrischen Bodenkörpers erfolgt. Außer zur Auflockerung des Boden dient die Flüssigkeit als Träger- und Transportmedium für mindestens einen den jeweiligen Schadstoff an Ort und Stelle (in situ) abbauenden und/oder umwandelnden Wirkstoff. Der Wirkstoff kann ein chemisches Mittel sein, das mit den Schadstoffen zu harmlosen Verbindungen reagiert, oder ein biologischer Nährstoff etc., der die Beseitigung der Schadstoffe direkt im Boden ermöglicht. Die für die biologischen Maßnahmen notwendige Sauerstoffzufuhr erfolgt meist über H₂O₂ mit dem Problem der Toxizität für Bakterien. Das bekannte Sprühverfahren ist zur Behandlung von Altdeponien nicht geeignet und kann auch in gewachsenen Böden nur dann eingesetzt werden, wenn eine Gefährdung des Grundwassers durch die in den Boden eingebrachte Flüssigkeit und den zugesetzten Wirkstoff nicht möglich ist.

Um im gesamten kontaminierten Bereich die für biologische Verfahren notwendigen aeroben Verhältnisse sicherzustellen, wurde schon versucht, solche Verhältnisse durch Einpumpen von Wasserstoffperoxyd (H₂O₂), und Nitrat (NO₃) oder durch Einblasen von Luft herzustellen. Dies brachte nur Teilerfolge, da große Bereiche der kontaminierten Böden von der Sauerstoffzufuhr abgeschnitten blieben und daher am biologischen Aubbauprozess nicht teilnehmen konnten. Der Grund dafür ist darin zu sehen, dass die Sauerstoffträger vorwiegend in Klüfte und durchlüftbare Zonen der Böden eindringen, wobei durch den einsetzenden Rotteprozess regelrechte Belüftungskanäle entstehen, dichtgelagerte Zonen der Böden, mangels entsprechenden Drucks, jedoch keinen Sauerstoff erhielten. Abhilfe wurde dadurch geschaffen (EP-B2 489 705), dass man das sauerstoffhaltige Gas intermittierend, insbes. mit einer Frequenz von 1/30 bis 1/10 Hz, unter hohem Druck, z.B. im Bereich zwischen 2 bis 10 bar, schlagartig in das kontaminierte Material einbläst (schießt), wobei die Dauer eines Einblasevorganges bevorzugt im Millisekundenbereich liegt.

Damit wird die Luft nicht kontinuierlich und mit bloß geringem Überdruck (0,05 bar bis 0,1 bar) in das Erdreich oder die Mülldeponie eingeblasen, sondern intermittierend pulsierend und unter wesentlich höheren Drücken (2 - 6 bar) quasi eingeschossen. Die Gesamtluftmenge blieb gegenüber anderen angewandten Methoden gleich, der Impuls ist jedoch bei der letzterwähnten Vorgangsweise, bei dem im Bereich von Millisekunden ablaufenden Einblasvorgang so groß, dass sich eine kugelförmige Druckwelle ausbildet, die unbeschadet von eventuell vorhandenen Klüften und porösen Bereichen, die Luft auch in dicht gelagerte Zonen des kontaminierten Bodens problemlos eindringen läßt. Damit können im gesamten kontaminierten Bereich aerobe Verhältnisse erreicht werden.

Als sauerstoffhaltiges Gas ist es besonders zweckmäßig, mit Sauerstoff angereicherte Luft zu verwenden. Die durch das schlagartige Zuführen des sauerstoffhaltigen Gases aus dem kontaminierten Material verdrängten Gase werden lokal abgesaugt, wobei gegebenenfalls das in der Zeiteinheit abgesaugte Volumen größer ist als das in der gleichen Zeiteinheit zugeführte sauerstoffhaltige Gas.

Zur Erzeugung der Druckstöße wurde es bekannt, eine Druckkammer vorzusehen, die mit ca. 3-6 bar aufgeblasen wird und zu der Ein- und Auslaßventile gehören. Die Regelung der Anzahl der Druckstöße pro Minute erfolgt über das Einlaßventil und den damit zu regelnden Druckaufbau. Ist der eingestellte Druck erreicht, öffnet das Auslaßventil und der Druck entweicht explosionsartig durch ein Rohr und eine Düse bzw. über Perforierungen des Rohres in das zu behandelnde Medium. Dabei wurde es bekannt, den Druckbehälter durch das Rohr zu bilden, wodurch die Druckkammer in ihrer Größe reguliert werden kann, indem jeweils mehr oder weniger der gesamten Rohrlänge als Druckkammer genutzt wird. Weiters kann mit wesentlich geringeren Drücken gearbeitet werden, da der Druckverlust, welcher entsteht, wenn das komprimierte Luft-Sauerstoff-Gemisch durch dünnere Rohre entweicht, entfällt.

Bekannt wurde es, zur Gaszufuhr Lanzen zu verwenden, wobei jede Lanze an einem Ende durch die Stirnfläche eines Kolbens verschließbar ist, der entgegen dem Druck einer Feder in einem Zylinder hin- und herbewegbar, insbesondere gleitbar gelagert ist, der über eine, bevorzugt den Kolben durchsetzende Öffnung, mit dem Innenraum eines Windkessels in Verbindung steht, wobei der Kolbenboden in dem der Öffnung der Lanze gegenüberliegenden Bereich mit Bohrungen versehen ist, die in einen im Inneren des Kolbens befindlichen Raum führen, der über eine, durch eine Feder belastete Ventilplatte verschließbare Öffnung mit dem Hubraum des Zylinders des Kolbens verbindbar ist. Diese Vorrichtung gestattet es, das Innere der Lanze plötzlich mit dem Druckraum des Windkessels für nur kurze Zeit zu verbinden und dadurch das sauerstoffhaltige Gas schlagartig aus dem Windkessel abzuführen und über die Lanze in den kontaminierten Boden zu injizieren. Diese Vorrichtung weist jedoch einen komplizierten Aufbau auf und hat infolge der Reibungsverluste in der Lanze einen sehr schlechten Wirkungsgrad, der durch Druckerhöhung ausgeglichen werden muß.

Die DE 200 20 636 U1 offenbart eine Absperrvorrichtung für eine ein rieselfähiges Gut führende Leitung mit einem Absperrkörper, der in Schließ- und Sperrstellung den Querschnitt der Leitung ausfüllt. Es ist ein Tragkörper mit einem Kanal zur Übertragung einer Druckerhöhung und mit wenigstens einer Austrittsöffnung aus diesem Kanal vorgesehen, um die Austrittsöffnung mit einer elastisch dehnbaren, als Absperrkörper dienenden Membrane abzuschließen. Die Membrane ist mittels Druckerhöhung in dem Kanal und in ihrem Inneren aufweitbar und an die Wandung der Leitung andrückbar.

Aus der WO 96/04079 ist ein Ventil bekannt geworden, welches an eine Quelle für ein unter Druck stehendes Arbeitsfluid angeschlossen ist und welches ein Rohr mit einem inneren Kanal, der eine Display-Flüssigkeit transportieren kann, sowie ein aufblasbares Ventil aufweist. Das Ventil kann mit einem Arbeitsfluid ausgedehnt werden, um den inneren Kanal zu schließen und die Display-Flüssigkeit daran zu hindern, durch das Rohr zu fließen, und entleert werden, um der Display-Flüssigkeit zu ermöglichen, durch das Rohr zu fließen.

Die US 5,771,937 offenbart eine Vorrichtung zum verschließen eines Rohrs, welche ein elastisches Hohlkörperelement enthält, das sich, wenn von innen Druck eingebracht wird, ausdehnt, um das Rohr zu blockieren. An einem Ende weist das Hohlkörperelement eine konisch geformte Wand mit einem nach innen gerichteten Scheitelpunkt auf. Bei Umgebungsdruck ist der Durchmesser des Hohlkörperelements geringer als der Durchmesser des Rohres, in das es eingesetzt ist. Der Durchmesser des Hohlkörperelements vergrößert sich mit zunehmendem Innendruck und die Länge der konisch geformten Wand nimmt ab.

Eines der Ziele der Erfindung ist es nunmehr, eine Einrichtung zum Öffnen und Schließen des Querschnittes einer Rohrleitung mit einem Abschlussorgan aus gummielastischem Material zu verwenden, wobei das Abschlussorgan durch ein Druckmedium, insbesondere Druckluft, in eine Lage gebracht wird, in der der Querschnitt der Rohrleitung geschlossen ist, wobei das Abschlussorgan als Ballon ausgebildet ist, dessen Innenraum über eine Steuerleitung mit dem Druckmedium beaufschlagbar ist zum Steuern des intermittierenden schlagartigen Einblasens bzw. Einschießens von sauerstoffhaltigem Gas, insbesondere mit einer Frequenz von 1/30 bis 1/10 Hz, unter einem Druck von z.B. 0,8-1,5 bar, in kontaminiertes, körniges oder stückiges Material, z.B. in Mülldeponien. Eine Solche Verwendung soll nicht nur auf dem Gebiet der Sanierung von Mülldeponien sondern auch für Frischmüllrotten eingesetzt werden können, darüber hinaus auch allgemein in Anwendungsgebieten, in welchen der Durchfluss durch eine Leitung auf einfache Weise unterbrochen werden soll, um sauerstoffhaltiges Gas in kontaminiertes, körniges oder stückiges Material schlagartig einzublasen, wenn auch das bevorzugte Anwendungsgebiet der Erfindung in der Sanierung von Mülldeponien gelegen ist. Dazu schlägt die Erfindung vor, dass bei der vorgenannten Verwendung gemäß der Erfindung die Rohrleitung, deren Querschnitt durch das Abschlussorgan geöffnet und geschlossen wird, als in das kontaminierte, körnige oder stückige Material einbringbare Lanze ausgebildet ist, die im Bereich ihres Endes mit Perforationen (Düsen) zur Abgabe des sauerstoffhaltigen Gases versehen ist, wobei das Abschlussorgan im Bereich anschließend an das von Perforationen noch freie Ende der Lanze angeordnet ist und der Ballon in unaufgeblasenem Zustand einen U-förmigen Längsschnitt aufweist. Eine solche Verwendung der Einrichtung zeichnet sich durch einen einfachen Aufbau und damit durch hohe Funktionssicherheit aus. Der Druck im Inneren des Ballons muß in der Sperrstellung des Durchflusses durch das Rohr höher sein (um etwa 2 bar) als der Druck im Rohr, der sich in der Absperrstellung einstellt, wobei dieser Überdruck abhängig ist von der Verformbarkeit des Ballons unter dem auf ihn von innen wirkenden Druck und auch von den auf ihn von außen wirkenden Druck, der seinerseits wieder vom Einsatzgebiet des Rohres abhängt.

Beim Steuern des intermittierenden schlagartigen Einblasens bzw. Einschießens von sauerstoffhaltigem Gas, insbesondere mit einer Frequenz von 1/30 bis 1/10 Hz, unter Druck, von z.B. 0,8-1,2 bar, in kontaminiertes, körniges oder stückiges Material, z.B. in Mülldeponien, kommt es darauf an, die Strömungsverluste stromabwärts des Abschlussorganes bis zum Austritt des gasförmigen Mediums aus der Rohrleitung möglichst gering, im Vergleich zur bekannten vorerwähnten Einrichtungen (EP-B2 489 705) zu halten, bei der zur Gaszufuhr Lanzen verwendet werden, wobei jede Lanze an einem Ende durch die Stirnfläche eines Kolbens verschließbar ist, der entgegen dem Druck einer Feder in einem Zylinder hin- und herbewegbar, insbesondere gleitbar gelagert ist, der über eine, bevorzugt den Kolben durchsetzende Öffnung, mit dem Innenraum eines Windkessels in Verbindung steht, wobei der Kolbenboden in dem der Öffnung der Lanze gegenüberliegenden Bereich mit Bohrungen versehen ist, die in einen im Inneren des Kolbens befindlichen Raum führen, der über eine, durch eine Feder belastete Ventilplatte verschließbare Öffnung mit dem Hubraum des Zylinders des Kolbens verbindbar ist. Diese Vorrichtung gestattet es, das Innere der Lanze plötzlich mit dem Druckraum des Windkessels für nur kurze Zeit zu verbinden und dadurch das sauerstoffhaltige Gas schlagartig aus dem Windkessel abzuführen und über die Lanze in den kontaminierten Boden zu injizieren.

Der Kolben als Verschlussorgan war bei dieser bekannten Einrichtung hiebei weit von den Öffnungen (Perforationen) der Lanze entfernt, durch die das Gas dem Deponiematerial zugeführt wird. Zwischen dem Verschlussorgan und den Perforationen der Lanze kam es hiebei zu Strömungsverlusten, die es erforderlich machten, im Windkessel einen hohen Druck bereit zu stellen, dessen Erzeugung einer hohen Kompressorleistung bedurfte.

Bei Verwendung einer Anordnung, bei der das Abschlussorgan unmittelbar vor dem am Ende der Lanze befindlichen Perforations- bzw. Düsenbereich angeordnet ist, treten zwischen Abschlussorgan und Perforationen (Düsen) im Inneren der Lanze kaum mehr Strömungsverluste auf, so dass die Beaufschlagung der Lanze mit dem sauerstoffhaltigen Gas mit niedrigerem Druck als bei der bekannten Verschlusseinrichtung erfolgen kann, die sich an dem von den Perforationen abgelegenen Ende der Lanze befindet. Hiedurch ist es, in Verbindung mit den weiteren Ausführungsformen der Erfindung, möglich, bis zu 77% der bisher benötigten Energie einzusparen.

Es kann ein Ballon verwendet werden, der mit einer in seine Seitenwand eingebetteten Armierung versehen ist, die bevorzugt von Schnüren bzw. Seilen, z.B. aus Kevlar (Produkt der Du Pont), gebildet ist, mit der Maßgabe, dass die Schnüre bzw. Seile mit ihren beiden Enden vom freien Ende des Ballons ausgehen, sich über den Boden des Ballons, insbesondere über dessen Zentrum erstrecken, wobei gegebenenfalls zusätzliche Armierungsschnüre bzw. -seile im Boden des Ballons angeordnet sind und vor dem Übergang des Bodens in die, als Zylinder ausgebildete Seitenwand enden. Durch Vorsehen der Armierung gelingt es, die Anzahl der Lastwechsel, die insbesondere im Bereich der Befestigung des Ballons an der Steuerleitung eine hohe Beanspruchung (Kerbbeanspruchung) des Ballons verursachen, zu erhöhen und damit die Standzeit des Ballons zu verbessern. Der auf dem Ballon außen lastende Gasdruck ist erheblich, wobei es durch die Gestaltung des Ballons mit U-Form aufweisenden, in das Ballonmaterial eingebetteten einzelnen Schnüren oder Seilen möglich wurde, die Verstärkungsflächen (Armierung) über die gesamte Länge des Ballons so gleichmäßig zu verteilen, dass ein vollkommen symmetrischer Ballon in allen Stadien des Aufblasens erreicht wird. Da die Schnüre bzw. Seile nur eine geringe Dehnung aufweisen und in Umfangsrichtung des Ballons nicht miteinander verbunden sind, kann sich der Ballon nur radial aufblasen. Das verringert nicht nur die durch Dehnung verursachte Beanspruchung des gummielastischen Materials, sondern erlaubt es auch, die auf dem Ballon lastenden Kräfte (aufgrund des Druckes im Rohr) über die Schnüre bzw. Seile, direkt auf die Fassung des Ballons und die Steuerleitung abzutragen.

Besonders zweckmäßig ist es, den Rohrleitungsquerschnitt und den Ballonquerschnitt (im entleerten Zustand) so aufeinander abzustimmen, dass der Durchgangsquerschnitt zwischen der Rohrleitung und dem unaufgeblasenen Ballon ca. 80% des lichten Rohrleitungsquerschnittes beträgt. Eine wesentliche Erhöhung dieser Zahl würde zu einer Erhöhung der Verformung des Ballons beim Verschließen der Rohrleitung führen, wodurch vor allem im Bereich der Befestigungsstellen des Ballons an der Steuerleitung, die Verformung des Ballons erhöht und damit die Zahl der ertragbaren Lastwechsel vermindert werden würde. Eine wesentliche Verminderung des Querschnittverhältnisses unter 80% würde hingegen die Strömungsverluste erhöhen und den dynamischen Wirkungsgrad ganz erheblich vermindern. Gerade dies soll jedoch vermieden werden, weil sonst der Vorteil vermindert würde, der im Falle der Erfindung dadurch erzielt wird, dass das Absperrorgan in Form eines Ballons nahe jenem Ende der Rohrleitung angeordnet werden kann, durch das das sauerstoffhaltige Gas austritt, was eine Verringerung des Energieverlustes bis zu 77% gegenüber jenen Ausführungsformen erzielen lässt, die - wie erwähnt - von einem federbelasteten Kolben am von den Perforierungen der Rohrleitung entfernten Ende der Rohrleitung zur Steuerung der Druckstöße hinsichtlich Frequenz und Stärke, Gebrauch machen. Die Verbesserung des dynamischen Wirkungsgrades wirkt sich bei Verwendung eines Windkessels für die Bereitstellung des Druckes des sauerstoffhaltigen Gases insoferne günstig aus, als der Vordruck im Windkessel theoretisch sogar auf 0,8 bar abgesenkt werden könnte, wobei dann, bei dem bisherigen System (EP-B2 489 705), ein ensprechend größerer Windkessel erforderlich werden würde, was jedoch ungünstig für den praktischen Einsatz wäre. Dem kann jedoch in einer weiteren Ausgestaltung der Erfindung begegnet werden, wenn die Lanze an eine zentrale Druckquelle, z.B. einen Kompressor mit oder ohne Windkessel, angeschlossen ist, wobei die Verbindungsleitung zwischen der zentralen Druckquelle und der Lanze zumindest teilweise, bevorzugt jedoch zur Gänze, als Windkessel genutzt wird, wobei -wenn vorgesehen - mehrere Lanzen je über eine Leitung bzw. ein Rohrleitungssystem mit der zentralen Druckquelle verbunden sind und diese Leitungen bzw. dieses Rohleitungssystem zumindest teilweise, bevorzugt jedoch zur Gänze, als Windkessel genutzt werden bzw. wird.

Das bietet folgenden wesentlichen Vorteil: Wird nämlich ein Windkessel, beispielsweise mit Luft, auf 3 bar aufgefüllt und über ein Schnellentlüftungsventil entleert, entsteht bestenfalls ein Mitteldruck von 1,5 bar. In der Praxis jedoch dürfte der gasdynamische Effekt wesentlich schlechter sein, weil in den unteren Druckbereichen (unter 0,5 bar) kaum mehr eine Wirkung erzielt wird. Wenn nun das gesamte Druckluftnetz als Gasbehälter genutzt werden würde, vorausgesetzt es ist entsprechend großzügig dimensioniert, würde über die gesamte Schusszeit ungefähr der im Netz vorhandene Druck anstehen. Außerdem kann man das eingeschlossene Volumen und den Mitteldruck in der Öffnungszeit mit der Öffnungszeit des Ventils steuern.

Praxisnäher ist eine Auslegung, die wie bisher das Rohr (die Lanze) als Hauptspeicher benutzt und bei der die Zuleitung vom Druckluftnetz zur Lanze etwas kleiner gehalten wird. Dabei ist ein gewisser Druckabfall in Kauf zu nehmen; die Handhabung wird aber wesentlich erleichtert. In diesem Falle hätte das Rohr (die Lanze) einen Durchmesser von 100 mm und die Zuleitung einen solchen von 1 ½ Zoll. Bei einem Ausgangsdruck im Netz von 1,5 bar würde bei ausreichender Öffnungszeit des Ventils der Druck im Rohr (in der Lanze) auf 0,7-0,8 bar abfallen. Der Mitteldruck würde ca. 1,1 bar betragen. Wegen des hohen dynamischen Wirkungsgrades bei Verwendung eines als Ballon ausgebildeten Ventils, ist der Effekt dennoch wesentlich besser als mit anders gestalteten Ventilen (EP-B2 489 705). Es ist daher durchaus gerechtfertigt davon auszugehen, dass bei Verwendung des erfindungsgemäßen Ballons als Ventil, die Blasleistung bei nur 1-1,5 bar Ausgangsdruck im Netze, etwa gleich gut ist, wie bei der bekannten Einrichtung (EP-B2 485 705) mit längerer Lanze bei einem Druck von 5-6 bar.

Als besonderer Vorteil ist es bei Anwendung der Erfindung möglich, dass mehrere oder alle Ventile eines mehrere Lanzen aufweisenden Lanzenfeldes gemeinsam angesteuert werden können. Dadurch können Gruppen von Blaslanzen gleichzeitig abgefeuert werden, was zu einer weiteren Verbesserung der Luftverteilung führt. Vorteilhafte Steuerungen sind hierbei beispielsweise:
1) Abschuss einer Lanzenreihe
2) Abschuss einer im Karree (Viereck) stehenden Lanzengruppe.

Die Ursache für die verbesserte Wirkung liegt darin, dass im Gegensatz zum bisher rein statistischen Abschuss der Lanzen, bei gleichzeitigem Abschuss einer Gruppe von Lanzen, die von den Lanzendüsen ausgehenden Druckwellen aufeinander zulaufen und im Bereich, in dem sie aufeinander treffen, einen Druckanstieg bewirken, während sonst die Druckwelle unter Druck und Geschwindigkeitsverlust verebbt.

Die Erfindung wird nachstehend anhand von in den Zeichnungen beispielsweise dargestellten Ausführungsformen näher erläutert.

Es zeigen,
Fig. 1 eine Einrichtung zur erfindungsgemäßen Verwendung in einem Längsschnitt,
Fig. 1a eine gegenüber Fig. 1 abgewandelte Konstruktion,
Fig. 1b eine Schnitt entlang der Linie Ib-Ib von Fig. 1a,
Fig. 2 das Abschlußorgan gemäß Fig. 1 im Längsschnitt, jedoch in einem gegenüber Fig. 1 größeren Maßstab,
Fig. 3 eine der Fig. 1 entsprechende Darstellung mit in Schließstellung befindlichem Abschlußorgan,
Fig. 4 eine Fig. 3 entsprechende Darstellung in der das Abschlußorgan halb in einem Längsschnitt und halb in Ansicht dargestellt ist,
Fig. 5 schematisch eine Anlage zur Müllbelüftung unter Anwendung erfindungsgemäßer Einrichtungen und
Fig. 6 einen Schnitt entlang der Linie VI-VI in Fig. 5.

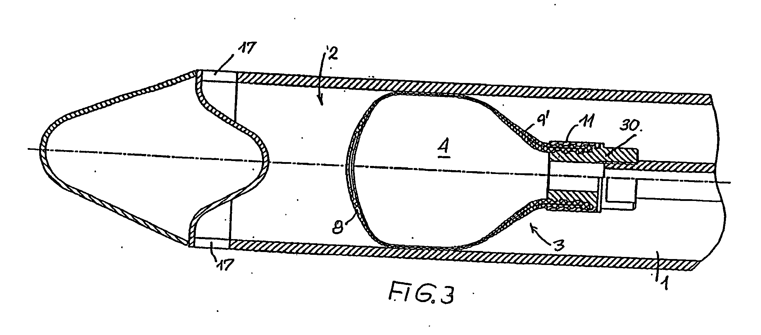

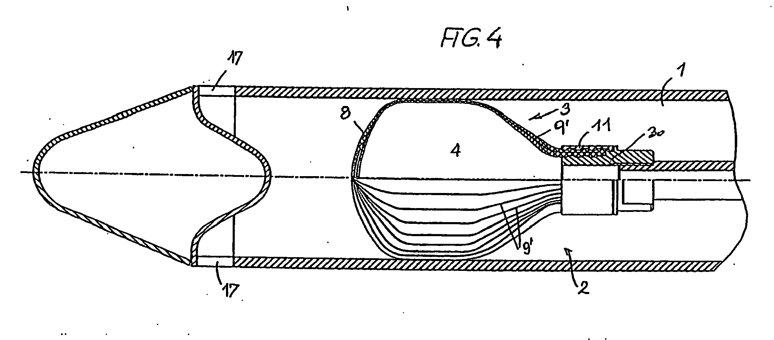

Die bei der erfindungsgemäßen Verwendung genutzte Einrichtung zum Öffnen und Schließen des Querschnittes einer Rohrleitung 1 weist ein Abschlussorgan 2 auf, das aus gummielastischem Material besteht. Das Abschlussorgan 2 wird durch ein Druckmedium, insbesondere Druckluft, in eine Lage gebracht, in der der Querschnitt der Rohrleitung 1 geschlossen ist, wie dies die Fig. 3 und 4 näher zeigen. Durch Entlüften des Abschlussorganes 2 wird dabei die Durchströmung der Rohrleitung 1 freigegeben. Das Abschlussorgan 2 ist als Ballon 3 ausgebildet. Der Innenraum 4 des Ballons 3 ist über eine Steuerleitung 5 mit dem Druckmedium beaufschlagbar.

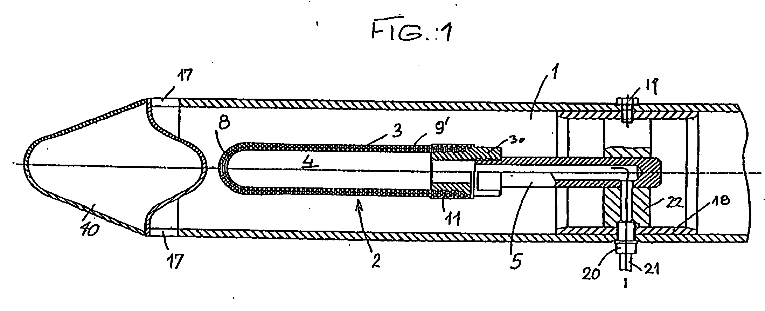

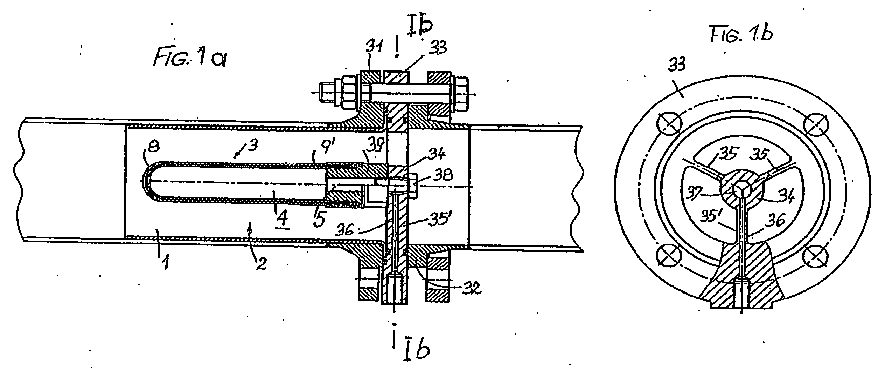

Der Ballon 3 ist in allen Ausführungsformen der Einrichtung zur erfindungsgemäßen Verwendung mit einer in seiner Seitenwand eingebetteten Armierung versehen, die bevorzugt von Schnüren bzw. Seilen 9, z.B. aus Kevlar, gebildet ist, die in Umfangsrichtung des Ballons nicht direkt miteinander verbunden sind. Diese Armierung in Form von Schnüren bzw. Seilen 9 verstärkt den Hals des Ballons 3, der auf die Steuerleitung 5 aufgeschoben ist. Die Armierung erstreckt sich daher vorzugsweise bis zum freien Ende 10 des Ballons 3. Der Ballon 3 ist durch eine Fassung 11 am gemäß den Fig. 1 ,3 und 4 mit einem Innengewinde ausgestatteten Einsatz 30 festgeklemmt.

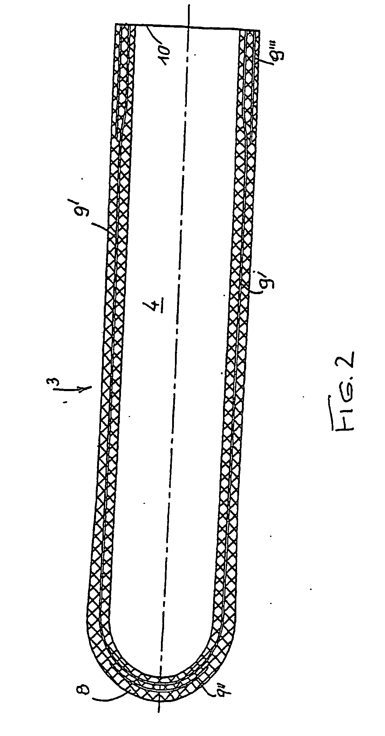

In der Ausführungsform gemäß den Fig. 1-4 weisen die einzelnen Schnüre bzw. Seile 9' der Armierung U-Form auf. Jede Schnur bzw. jedes Seil 9' geht mit jedem seiner beiden Enden vom freien Ende 10 des Ballons aus und erstreckt sich mit seinem die beiden Schenkel der U-Form verbindenden Abschnitt über den Boden 8 des Ballons 3, insbesondere über das Zentrum des Bodens 8. Zusätzliche Armierungsschnüre bzw. -seile 9" können im Boden 8 des Ballons 3 angeordnet werden und enden bevorzugt vor den Seitenwänden des Ballons 3. Im Bereich des freien Endes können zusätzliche Armierungsschnüre bzw. -seile 9''', ähnlich zu Verstärkungszwecken wie die Schnüre bzw. Seile 9" angeordnet werden. Der Ballon 3 gemäß den Fig. 1-4 dehnt sich zufolge der U-Form aufweisenden Armierungsschnüre bzw. -seile 9' im wesentlichen nur quer zu seiner Längsachse, nicht bzw. kaum in Längsrichtung.

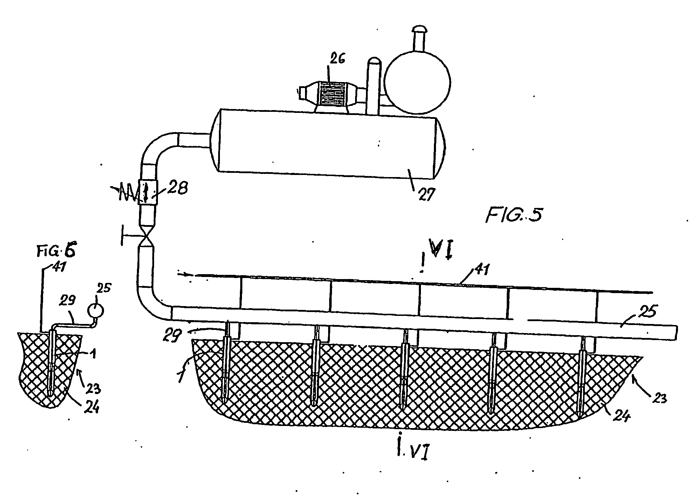

Die Halterung des Ballons 3 in der Rohrleitung 1 erfolgt gemäß Fig. 1 durch eine feststellbare Hülse 18, die samt Steuerleitung 5 und Ballon 3 in die gewünschte Stellung im Rohr 1 gebracht wird, um dort beispielsweise mittels Schrauben 19 fixiert zu werden. Die Steuerleitung 5 wird mittels einer Tülle 20, welche die Rohrleitung 1 und die Hülse 18 durchsetzt, an die Druckleitung 21 angeschlossen, über welche das Medium zum Aufblasen des Ballons 3 zugeführt wird. Der Druck des Aufblasmediums soll etwa 2 bar über dem in der geschlossenen Rohrleitung 1 sich aufbauenden Druck liegen. Die Steuerleitung 5 ist mit der Hülse 18 über einen in der Hülse befestigten Einsatz 22 verbunden, über den die zum Aufblasen des Ballons 3 erforderliche Druckluft zugeführt wird und der z.B. mit axialen Öffnungen für den Durchlaß des über die Rohrleitung 1 den Perforationen (Düsen) 17 zuzuführenden Behandlungsmediums für den Müll versehen ist in den die Rohrleitung 1 eingebracht ist. Diese Anordnung dient insbesondere zum Einbau des Ventils in beliebige Leitungssysteme. Bei der Ausführungsform gemäß Fig. 1 (und jener nach den Fig. 3 bis 5) ist das Ende des Rohres 1 mit Perforationen (Düsen) 17 und einem Eindringkörper 40 versehen, wenn das Rohr als Belüftungslanze (Fig. 5) eingesetzt wird.

In der Ausführungsform gemäß den Fig. 1a und 1b erfolgt die Halterung des Ballons 3 im Rohr 1 durch einen zwischen zwei Flanschen 31, 32 geklemmten Haltering 33 der mit von einer zentralen Nabe 34 ausgehenden Stegen 35, 35' versehen ist, von welchen einer 35' in seiner Längsrichtung mit einer Bohrung 36 für die Zufuhr des Aufblasmediums zu einer die Nabe 34 durchsetzenden weiteren Bohrung 37 versehen ist, die an einem Ende durch eine Hohlschraube 38 verschlossen ist und mit dem Innenraum 4 des Ballons 3 verbunden ist. Der Ballon 3 ist über einen Einsatz 39 fest mit der Nabe 34 des Halteringes 33 verbunden.

Der Durchgangsquerschnitt zwischen der Rohrleitung 1 und dem unaufgeblasenen Ballon 3 beträgt in allen dargestellten Ausführungsbeispielen bevorzugt 80% des lichten Rohrleitungsquerschnittes.

Die Einrichtung kann erfindungsgemäß zum Steuern des intermittierenden, schlagartigen Einblasens bzw. Einschießens von sauerstoffhaltigem Gas, insbesondere mit einer Frequenz von 1/30 bis 1/10 Hz unter hohem Druck von z.B. 1-1,5 bar in kontaminiertes, körniges oder stückiges Material, z.B. in Mülldeponien 23, verwendet werden. Die Rohrleitung 1 wird hiebei als in das kontaminierte körnige oder stückige Material einbringbare Lanze ausgebildet, die im Bereich ihres Endes mit Perforationen 17 zur Abgabe des sauerstoffhaltigen Gases versehen ist, wobei das Abschlussorgan 2 im Bereich des von Perforationen (Düsen) 17 noch freien Endes der Lanze angeordnet ist. Es ist dabei von Bedeutung, dass sich das Abschlussorgan (Ballon 3) möglichst nahe dem mit Perforationen (Düsen) 17 versehenen Teil der Lanze befindet, um Strömungsverluste zwischen dem Abschlussorgan und den Perforationen (Düsen), durch welche das Gas in die Deponie übertritt, weitestgehend zu vermeiden.

Fig. 5 zeigt das Fließbild einer Belüftungsanlage, die mit erfindungsgemäßen Einrichtungen zur Aerobisierung einer Hausmülldeponie 23 ausgestattet ist. Die in der Zeichnung mit 24 bezeichnete, zu entsorgende Müllschicht bedeckt den Mutterboden (nicht dargestellt) und ist oben durch eine Erdschicht (nicht dargestellt) abgedeckt, auf welche Humus aufgezogen ist.

Die Rohrleitungen 1 sind über ein Rohrsystem 25 mit einem von einem Druckluftkompressor 26 gespeisten Windkessel 27 mit Druckluft versorgt. Zur Abstimmung der Druckluftversorgung können Druckminderventile 28 den Rohrleitungen 1 vorgeschaltet werden.

Mit 41 ist eine Steuerluftleitung bezeichnet, über welche Luft zu den als Ballon 3 ausgebildeten Ventilen geführt wird. Die Steuerluft wird zweckmäßig durch einen Hochdruckkompressor zur Verfügung gestellt. Der Steuerdruck beträgt 3 - 3,5 bar.

Ist eine Sauerstoffanreicherung erforderlich, so kann O₂ aus einer O₂- Anlage einer Mischkammer zugeführt und der Druckluft dosiert zugemischt werden.

Die Deponiegase, die durch die Erdschicht und den Humusauftrag nur in geringem Maße abziehen können, werden über Sauglanzen (nicht dargestellt), einem Leitungsnetz und einer Saugpumpe abgesaugt und einem Biofilter zugeführt. Das Rohrleitungssystem 25 kann hiebei zumindest teilweise bevorzugt jedoch zur Gänze als Windkessel genützt werden.

Die Rohrleitung 1 kann in einem Ausführungsbeispiel einen Durchmesser von 100 mm und das Rohrleitungssystem 25 einen solchen von 150 mm aufweisen. Die vom Rohrleitungssystem 25 zu den Rohrleitungen 1 (Lanzen) führenden Verbindungsleitungen 29 können in einer solchen Ausführung von 5/4" Rohren gebildet sein.

Die geringeren Drücke, mit welchem das sauerstoffhaltige Gas in das Material eingeschossen wird und/oder die Verwendung des Rohrleitungssystems 25 als Speicher ermöglichen die Einsparung von Energie.

## Patentansprüche

1. Verwendung einer Einrichtung zum Öffnen und Schließen des Querschnittes einer Rohrleitung mit einem Abschlussorgan aus gummielastischem Material, wobei das Abschlussorgan durch ein Druckmedium, insbesondere Druckluft, in eine Lage gebracht wird, in der der Querschnitt der Rohrleitung geschlossen ist, wobei das Abschlussorgan (2) als Ballon (3) ausgebildet ist, dessen Innenraum (4) über eine Steuerleitung (5) mit dem Druckmedium beaufschlagbar ist zum Steuern des intermittierenden schlagartigen Einblasens bzw. Einschießens von sauerstoffhaltigem Gas, insbesondere mit einer Frequenz von 1/30 bis 1/10 Hz, unter einem Druck von z.B. 0,8-1,5 bar, in kontaminiertes, körniges oder stückiges Material, z.B. in Mülldeponien, **dadurch gekennzeichnet, dass** die Rohrleitung (1) deren Querschnitt durch das Abschlussorgan (2) geöffnet und geschlossen wird, als in das kontaminierte, körnige oder stückige Material einbringbare Lanze ausgebildet ist, die im Bereich ihres Endes mit Perforationen (17) zur Abgabe des sauerstoffhaltigen Gases versehen ist, wobei das Abschlussorgan (2) im Bereich anschließend an das von Perforationen (17) noch freie Ende der Lanze angeordnet ist und der Ballon in unaufgeblasenem Zustand einen U-förmigen Längsschnitt aufweist.

2. Verwendung nach Anspruch 1, mit einem Ballon (3), der mit einer in seine Seitenwand eingebetteten Armierung versehen ist, die bevorzugt von Schnüren bzw. Seilen, z.B. aus Kevlar, gebildet ist, mit der Maßgabe, dass die Schnüre bzw. Seile (9') mit ihren beiden Enden vom freien Ende des Ballons (3) ausgehen, sich über den Boden (8) des Ballons (3), insbesondere über dessen Zentrum erstrecken, wobei gegebenenfalls zusätzliche Armierungsschnüre bzw. -seile (9") im Boden (8) des Ballons (3) angeordnet sind und vor dem Übergang des Bodens (8) in die, als Zylinder ausgebildete Seitenwand enden.

3. Verwendung nach Anspruch 1 oder 2, **dadurch gekennzeichnet, dass** der Durchgangsquerschnitt zwischen der Rohrleitung (1) und dem unaufgeblasenen Ballon (3) etwa 80 % des lichten Rohrleitungsquerschnittes beträgt.

4. Verwendung nach Anspruch 1, mit der Maßgabe, dass die Lanze an eine zentrale Druckquelle, z.B. einen Kompressor (26) mit oder ohne Windkessel (27) angeschlossen ist, wobei die Verbindungsleitung zwischen der zentralen Druckquelle und der Lanze zumindest teilweise, bevorzugt jedoch zur Gänze, als Windkessel genutzt wird, wobei mehrere Lanzen je über eine Leitung bzw. ein Rohrleitungssystem (25) mit der zentralen Druckquelle verbunden sind und diese Leitungen bzw. dieses Rohrleitungssystem zumindest teilweise, bevorzugt jedoch zur Gänze, als Windkessel genutzt werden bzw. wird.

5. Verwendung nach Anspruch 1 oder 4, mit der Maßnahme, dass mehrere Lanzen, insbesondere in einer Reihe angeordnete Lanzen oder in einem Karree angeordneten Lanzen zu eine Gruppe von Lanzen zusammengefasst sind, wobei die Lanzen einer Gruppe jeweils gleichzeitig abgefeuert, d.h. schlagartig mit dem Druckmedium versorgt werden, wobei gegebenenfalls auch alle Lanzen der Lanzenfelder eine Gruppe von Lanzen bilden, die gleichzeitig abgefeuert werden.

## Claims

1. Use of a device for opening and closing the cross-section of a conduit with a closure element of rubbery elastic material, wherein the closure element is moved by a pressure medium, particularly compressed air, into a position, in which the cross-section of the conduit is closed, wherein the closure element (2) is constructed in the form of a balloon (3), the interior (4) of which may be acted on by the pressure medium via a control line (5) for controlling the intermittent, abrupt blowing in or injection of oxygen-containing gas, particularly with a frequency of 1/30 to 1/10 Hz, under a pressure of e.g. 0.8 - 1.5 bar, into contaminated granular or particulate material, e.g. in rubbish dumps, **characterised in that** the conduit (1), whose cross-section is opened and closed by the closure element (2), is constructed in the form of a lance, which may be introduced into the contaminated, granular or particulate material and is provided in a region of its end with perforations (17) for discharging the oxygen-containing gas, wherein the closure element (2) is disposed in the region adjoining the end of the lance which is free from perforations (17) and the balloon has a U-shaped longitudinal section in the uninflated state.

2. Use as claimed in Claim 1 with a balloon (3), which is provided with reinforcement embedded in its side wall, which is preferably constituted by cords or ropes, e.g. of Kevlar, with the proviso that both ends of the cords or ropes (9') start from the free end of the balloon (3), extend over the base (8) of the balloon (3), particularly over its centre, whereby optionally additional reinforcing cords or ropes (9") are arranged in the base (8) of balloon (3) and terminate before the transition of the base (8) into the side wall, which is constructed in the form of a cylinder.

3. Use as claimed in Claim 1 or 2, **characterised in that** the passage cross-section between the conduit (1) and the uninflated balloon (3) is about 80% of the free cross-section of the conduit.

4. Use as claimed in Claim 1 with the proviso that the lance is connected to a central pressure source, e.g. a compressor (26) with or without a pressure reservoir (27), wherein the connecting pipe between the central pressure source and the lance is used at least partially and preferably wholly as a pressure reservoir, wherein a plurality of lances are connected via respective pipes or a conduit system (25) to the central pressure source and these pipes or this conduit system is or are used at least partially and preferably entirely as an air reservoir.

5. Use as claimed in Claim 1 or 4 with the feature that a plurality of lances, particularly lances arranged in a row or lances arranged in a square arrangement, are combined to form a group of lances, wherein the lances of a group are each fired, i.e. abruptly supplied with the pressure medium, simultaneously, wherein all the lances of the lance fields optionally constitute a group of lances, which are fired simultaneously.

## Revendications

1. Utilisation d'un dispositif pour ouvrir et fermer la section transversale d'une conduite avec un organe de fermeture en matière ayant l'élasticité du caoutchouc, l'organe de fermeture étant amené dans une position par un fluide sous pression, en particulier de l'air comprimé, dans laquelle la section transversale de la conduite est fermée, l'organe de fermeture (2) étant réalisé comme un ballon (3), dont l'espace intérieur (4) peut être sollicité par une conduite de commande (5) en un fluide sous pression pour la commande de l'insufflation ou l'injection intermittente brusque de gaz oxygéné, en particulier à une fréquence de 1/30 à 1/10 Hz sous une pression de par exemple 0,8 à 1,5 bar, dans la matière contaminée, en grains ou en morceaux, par exemple dans des décharges rudologiques, **caractérisée en ce que** la conduite (1), dont la section transversale est ouverte et fermée par l'organe de fermeture (2), est réalisée comme une lance pouvant être introduite dans la matière contaminée, en grains ou en morceaux, qui est pourvue dans la zone de son extrémité de perforations (17) pour la délivrance du gaz oxygéné, l'organe de fermeture (2) étant disposé dans la zone jouxtant l'extrémité encore libre de perforations (17) de la lance et le ballon présentant à l'état non gonflé une coupe longitudinale en forme de U.

2. Utilisation selon la revendication 1, avec un ballon (3) qui est pourvu d'une armature encastrée dans sa paroi latérale, qui est formée de préférence par des cordons ou des câbles, par exemple en Kevlar, sous réserve que les cordons ou les câbles (9') avec leurs deux extrémités partent de l'extrémité libre du ballon (3), s'étendent sur le fond (8) du ballon (3), en particulier sur son centre, des cordons ou câbles d'armature (9") supplémentaires étant éventuellement disposés dans le fond (8) du ballon (3) et se terminant avant le passage du fond (8) dans la paroi latérale réalisée comme un cylindre.

3. Utilisation selon la revendication 1 ou 2, **caractérisée en ce que** la section de passage entre la conduite (1) et le ballon (3) non gonflé s'élève à peu près à 80 % de la section transversale intérieure de la conduite.

4. Utilisation selon la revendication 1 sous réserve que la lance soit raccordée à une source de pression centrale, par exemple un compresseur (26) avec ou sans réservoir d'air (27), la conduite de raccordement entre la source de pression centrale et la lance étant utilisée au moins en partie, de préférence toutefois dans son ensemble comme réservoir d'air, plusieurs lances étant reliées chacune par une conduite ou un système de conduites (25) à la source de pression centrale et ces conduites ou ce système de conduites (25) étant utilisé au moins en partie, de préférence toutefois dans son ensemble comme réservoir d'air.

5. Utilisation selon la revendication 1 ou 4, sous réserve que plusieurs lances, en particulier des lances disposées dans une rangée ou des lances disposées dans un carré sont regroupées pour former un groupe de lances, les lances d'un groupe faisant respectivement feu en même temps, c'est-à-dire étant alimentées brusquement en fluide sous pression, toutes les lances des champs de lances formant éventuellement aussi un groupe de lances qui font feu en même temps.
